(19) Europäisches Patentamt
European Patent Office
Office européen des brevets

(11) Publication number: **0 159 691 B1**

(12) # EUROPEAN PATENT SPECIFICATION

(45) Date of publication of patent specification: **27.02.91** (51) Int. Cl.[5]: **H04N 1/46**

(21) Application number: **85104888.4**

(22) Date of filing: **23.04.85**

(54) **Color image display system.**

(30) Priority: **27.04.84 JP 84259/84**

(43) Date of publication of application:
**30.10.85 Bulletin 85/44**

(45) Publication of the grant of the patent:
**27.02.91 Bulletin 91/09**

(84) Designated Contracting States:
**DE FR GB IT**

(56) References cited:
**EP-A- 0 132 641**

**COMPUTER GRAPHICS, vol. 16, no. 3, July 1982, pages 297-307; P. HECKBERT: "Color image quantization for frame buffer display"**

(73) Proprietor: **International Business Machines Corporation**
**Old Orchard Road**
**Armonk, N.Y. 10504(US)**

(72) Inventor: **Tozawa, Yoshio**
**1485-5 Nakanoshima Tama-ku**
**Kawasaki-shi Kanagawa-ken(JP)**

(74) Representative: **Herzog, Friedrich Joachim, Dipl.-Ing.**
**IBM Deutschland GmbH Schönaicher Strasse 220**
**D-7030 Böblingen(DE)**

**EP 0 159 691 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a method and an apparatus for selecting the colours to be displayed of a colour image in a colour image display system, especially it relates to a colour image display system of a colour look-up table type, and more paticularly it relates to such a system which displays an image originally having many more colour components than the entries of the colour look-up table, or colours that can be displayed simultaneously, without substantial deterioration of image quality.

Recently, color image displays for processing color images began to employ color look-up tables. Fig. 6 shows an example of such color image displays, wherein image data for one frame are stored in a refresh memory 1 with the bit map system, said memory 1 being accessed by the vertical and the horizontal synchronization of a CRT (cathode ray tube) 2 to sequentially address a color look-up table 3. The look-up table 3 feeds desired primary colors of red, green and blue to D/A (digital-to-analog) converters 4A, 4G and 4B in a later stage according to the address. Then basing on output of the D/A converters the CAT 2 is driven.

In such a color image display, the number of colors that can be displayed on the screen of CRT 2 is determined by the number of stages of the D/A converters 4R, 4G and 4B. For example, if each of the converters 4R, 4G and 4B has eight stages, 16777216 (= $256^3$) colors can be displayed. On the other hand, the number of color that can be simultaneously displayed on the screen of CAT 2 is determined by the number of entries of the color look-up table 3, or the number of bits of pixel data that are stored in the refresh memory 1. For example, if the pixel data are of eight bits, only 256 (= $2^8$) colors can be displayed simultaneously.

Usually, the number of colors that can be displayed is designed large by increasing the number of stages of each D/A converter, while the number of colors that can be displayed simultaneously is designed small by reducing the number of bits of the pixel data.

Of course, it may be possible to increase the number of bits in the pixel data, and to employ, for the color look-up table 3, one which has a very large number of entries. This arrangement allows to store an original image in the refresh memory 1 without substantial deterioration in its quality, and to faithfully display it on the CAT 2. For example, in case where a digitizer is used that generates eight bits for each of red, green and blue of one pixel, no deterioration in the image quality occurs if each pixel data is stored in the refresh buffer 1 with 24 bits, and subsequently decoded by the color look-up table 3 that has entries of 16777216 (= $2^{24}$).

However, such arrangement is little practical in view of processing speed and complexity of its construction. Thus, it is conventionally arranged to improve performance without deterioration of image quality by suitably selecting the simultaneously displaying colors, and then by suitably mapping colors composing an original image of original colors to said selected simultaneously displaying colors. Such selection of the simultaneously displaying colors and the mapping are called color quantization.

The popularity algorithm and the median cut algorithm are known techniques for the quantization. These algorithms first determine the simultaneously displaying colors, and map the original colors to the simultaneously displaying colors. The Popularity algorithm refers to the popularity to determine the simultaneously displaying colors. See Fig. 7 to recognize the popularity. Fig. 7 shows a color space that is formed by color data in which eight bits are assigned for each of red, green and blue. Each color data is represented by elements (i,j,k) in the color space (where i, j and k = 0 - 255). Each of, for example, 1048576 (= 1024 x 1024) pixels in a frame image is distributed to the elements (i,j,k) in the color space by scanning the image with a digitizer. The number of pixels divided to each element is called popularity of elements. A correlation table between each element and its popularity is called a three-dimensional histogram. The popularity algorithm determines the simultaneously displaying colors according to the size of popularity. For example, in case where the number of the simultaneously displaying colors are 256, the color elements of the largest to 256th popularity are selected as the simultaneously displaying colors.

The median cut algorithm utilizes each color in a color map to represent equal number of pixels in an original image, wherein the color space is sequentially divided into two so that each of two regions contains equal number of pixels. Finally, it divides the color space into the same number of regions as the simultaneously displaying colors, for example, 256 regions, and then determines the colors representing these divided regions respectively, which become the simultaneously displaying colors.

Refer "SIGGRAPH '82 Proceedings Vol. 16, No. 3, July, 1982 p. 297 - p. 307 [ACM]" for the details of the popularity algorithm and the medium cut algorithm.

Although the popularity algorithm and the medium cut algorithm were proposed for color quantization as above stated, this algorithm has the shortcoming that it often causes errors when the simultaneously displaying colors are selected, and that it has complicated procedures to map the original colors to the

simultaneously displaying colors.

It is an object of the present invention to overcome the above situation. Especially the invention is thought to provide a colour image display system of the colour look-up table type, that can reduce errors in selecting the simultaneously displaying colors, make deterioration of the image quality for an image to be finally displayed as small as possible, and easily perform the process.

This object is solved by the method and the apparatus as claimed. According to that, a colour image display system for colour image display comprises:

means for calculating the number of pels within each sub-space defined on a whole color space;

means for selecting the sub-space which has the largest number of pels from sub-spaces other than the sub-spaces represented by the displaying colors which have already been determined;

means for determining whether the requirement,

$$M \geqq \frac{A - B}{n1 - n2}$$

is satisfied or not, wherein M is said largest number of pels, A is the number of all the pels of a color image to be displayed, B is the number of pels in the sub-spaces represented by the displaying colors which have already been determined, $n_1$ is the number of all the displaying colors, and $n_2$ is the number of the displaying colors which have already been determined;

means for selecting the color representing the subspace with the largest number of pels, as one of those sub-spaces of which the represented colour is to be displayed, when said requirement is satisfied; and means for incrementing the size of the sub-space, when said requirement is not satisfied.

One embodiment of the invention is described by referring to the attached drawing. Although the embodiment is illustrated as one implemented in hardware, it is of course possible to employ a software implementation. In the drawing

Fig. 1 is a block diagram schematically illustrating one embodiment of the invention;
Fig. 2 is a block diagram illustrating details of the color quantizer 13 shown in Fig. 1;
Fig. 3 is a flowchart for explaining the color quantizer 13 shown in Fig. 2;
Figs. 4 and 5 are diagrams for explaining the quantizer 13 shown in Fig. 2;
Fig. 6 is a block diagram explaining a prior art;
Fig. 7 is a diagram for explaining the three-dimensional histogram.

Fig. 1 shows the whole embodiment, wherein a digitizer 11 will generate color image data by scanning an original image. The color image data are a stream of pixel data, which are formed with, for example, 24 bits. That is, they have eight-bit information for each of red, green and blue. Take for example. Such case is considered where the digitizer 11 creates 1024 x 1024 pixel data through scanning of one frame. Then, total number of pixels in one frame are 1048576.

The color image data created by the digitizer 11 are supplied to a three-dimensional histogram processor 12. The processor 12 calculates a three-dimensional histogram by distributing each pixel to each element (i,j,k) (see Fig. 7) basing on the color image data (pixel data) being supplied. The data from the three-dimensional processor are supplied to a color quantizer 13. The details of the color quantizer 13 will be described later by referring to Figs. 2 and 3. The quantizer 13 performs color quantization as indicated by its designation, and more particularly supplies color translation setting data CTS to a color translation table 14, and color look-up table setting data CLUTS to a color look-up table 16 of a display 15. The details of the data CTS and CLUTS will be cleared later.

The color image data from the digitizer 11 are also fed to the color translation table 14, where 16777216 varieties of color data are mapped to predetermined color numbers, for example, 0 - 256, and each of the color image data is translated to one of the color number. These resulting color number data are stored in a refresh memory 17 of the display 15 with a bit map system.

The display 15 has D/A converters 18R, 18G and 18B, and a CRT 19 in addition to the above-mentioned color look-up table 16 and the refresh memory 17. Of course, the color number data stored in the refresh memory 17 are read according to the vertical and the horizontal synchronization of the CRT 19. The color number data from the refresh memory 17 access the color look-up table 16, and feed out digital color signals of red, green and blue corresponding to the color number data to a later stage, which digital signals are converted into analog color signals by the D/A converters 18R, 18G and 18B to drive the CRT 19 for their display. The color numbers are correlated with the digital color signals of red, green and blue, in other words, the simultaneously displaying colors by the color look-up table setting data CLUTS and the color translation setting data CTS from the color quantizer 13. This operation will also be cleared later.

Now referring to Figs. 2 - 5, the color quantizer 13 shown in Fig. 1 is described in more detail.

As shown in Fig. 2, the color quantizer 13 comprises a pseudo-three-dimensional histogram storage 21, a maximum number pixel selecting circuit 22, a totalizer circuit 23, a judging circuit 24, a neighbourhood determining circuit 25, a neighbourhood merging circuit 26, and a pseudo-three-dimensional histogram processing circuit 27.

The pseudo-three-dimensional histogram storage 21 initially stores the histograms supplied from the three-dimensional histogram processor 12. That is, it stores popularity H (i,j,k) for each element (i,j,k) in the color space shown in Fig. 7. In procedures for determining the simultaneously displaying colors, it also stores popularity S (i,j,k) and a distance D (i,j,k) both generated in a pseudo histogram processor 27.

The maximum number pixel selecting circuit 22 will select the largest popularity S (i,j,k) stored in the pseudo-three-dimensional histogram storage 21. Now, the result of selection M is expressed as M = Max S (i,j,k). The totalizer circuit 23 is to determine total N of S (i,j,k) stored in the pseudo-three-dimensional histogram storage 21. That is, N = Σ S (i,j,k). The judging circuit 24 judges whether or not

$$M \geqq \frac{N}{nr}$$

is established for the values M and N, where nr is the number of simultaneously displaying colors not yet determined. For example, it is decremented 256, 255, ..., 1 according to the simultaneously displaying color determining means.

The neighbourhood determining circuit 25 will define a neighbourhood for an elements (i,j,k), and to determine elements (i',j',k') contained in the neighbourhood. More particularly, it makes the elements (i',j',k') satisfying

$$(i - i')^2 + (j - j')^2 + (k - k')^2 \leqq R$$

the elements in the neighbourhood. As it will be understood later, the neighbourhood gradually increases, and, if the elements (i,j,k) are indicated by a unit cube shown by solid lines in Fig. 4A for convenience, the elements (i',j',k') contained the smallest neighbourhood are six unit cubes shown by broken lines in Fig. 4A, the secondary smallest neighbourhood being 27 unit cubes as shown by broken lines in Fig. 4B. Then, (4 x 4 x 4) unit cubes are contained in the next neighbourhood, ($\ell$ x $\ell$ x $\ell$) unit cubes being contained in the neighbourhood thereafter (where $\ell$ = 5. 6. ...).

The pseudo histogram processing circuit 27 will calculate S (i,j,k) and D (i,j,k) that are briefly explained earlier. S (i,j,k) is expressed as:

$$S\ (i,j,k) = H\ (i,j,k) + \sum_{i'} \sum_{j'} \sum_{k'} H\ (i',j',k')$$

That is, S (i,j,k) is a total of popularity contained in the neighbourhood of the element (i,j,k). D (i,j,k) is expressed as:

$$D\ (i,j,k) = \sum_{i'} \sum_{j'} \sum_{k'} \{(i-i')^2 + (j-j')^2 + (k-k')^2\}$$

where i', j' and k' designate an element which has H (i',j',k') of non-zero. D (i,j,k) indicates how much the element (i,j,k) is off from the center of whole elements (i',j',k') with H (i',j',k') ≠ 0.

The neighbourhood merge circuit 26 will search elements (i',j',k') having H (i',j',k') of non-zero in the neighbourhood of the element (i,j,k) that has been registered in the color look-up table 16 as the simultaneously displaying color, and then set again the color translation table 14 so that the element is mapped to a corresponding color number. In this case, H (i',j',k') in the pseudo-three-dimensional histogram storage 21 is set for zero.

Now, referring to Fig. 3, the operation of the color quantizer 13 in Fig. 2 is described.

The operation is first started by storing the popularity H (i,j,k) calculated in the three-dimensional

processor 12 in the pseudo-three-dimensional storage 21 (Step 31). Then, S (i,j,k) in the three-dimensional histogram storage 21 is initialized for said H (i,j,k) (Step 32). Further, the neighbourhood R in the neighbourhood determining circuit 25 is initialized for R = 0 (Step 33), the number of residual simultaneously displaying colors N for $N = N_0$ (for example, 256) (Step 34)

Then, a total T is calculated. That is, the totalizer circuit 23 executes $T = \Sigma S(i,j,k)$ (Step 35). Since immediately after the beginning operation, H (i,j,k) = S (i,j,k) and H (i,j,k) is also fed from the three-dimensional processor 12, $T = \Sigma S(i,j,k)$ = the number of all the pixels in the frame. For example, 1048576 (= $1024^2$). Next, it is judged whether or not T = 0 (Step 36). If T = 0, the operation terminates because the mapping is completed for all of original colors (Step 37). If $T \neq 0$, a further procedure for determination of the simultaneously displaying color continues, and then the maximum number pixel selecting circuit 22 selects the largest S (i,j,k) to obtain M = Max S (i,j,k) (Step 38). In this case, if there are a plurality of largest S (i,j,k), then one with the smallest D (i,j,k) is selected. Then, the judging circuit 24 executes the judgment of

$$M \geqq \frac{N}{nr}$$

(Step 39).

$$M \geqq \frac{N}{nr}$$

Now, the meaning of conditional expression is considered. Briefly, the conditional expression enables remaining pixels to be distributed to the remaining simultaneously displaying colors as evenly as possible. For example, such a case is considered where 240 out of 256 simultaneously displaying colors are already registered, with nr = 16 (256 - 240) and T = 10000.

Fig. 5 shows a two-dimensional color space rather than a three-dimensional one for convenience of description. Popularity for $S_1$, $S_2$, $S_3$, ... are as shown in Fig. 5. In the case of Fig. 5A, it is desirable to divide remaining pixels 10000 into 16 as even as possible.

$$\text{If } M = S_1 \approxeq \frac{10000}{16},$$

it satisfies the best selection requisite to select this $S_1$ as the simultaneously displaying color. Actually, although $S_1$ contains slightly surplus pixels because of

$$M = S_1 = 6000 \geqq \frac{10000}{16} = \frac{N}{nr},$$

this surplus doesn't affect the decision that $S_1$ should be selected as the simultaneously displaying color. Since the slightly surplus pixels cannot be considered to be independent from $S_1$, and errors from them is small, $S_1$ is selected as the simultaneously displaying color as it is.

$$\text{If } M \geqq \frac{N}{nr}$$

is established, return to Step 35 by substituting (N - 1) for new N (Step 40). In this case, S (i,j,k) with the largest number of pixels is selected as the simultaneously displaying color, and registered in the color look-up table 16. At the same time, this S (i,j,k) is deleted from the pseudo-three dimensional histogram storage 21, and H (i,j,k) and H (i',j',k') contained in S (i,j,k) are set for zero. On the other hand, if

$$M \geqq \frac{N}{nr}$$

is not established, the neighbourhood merging circuit 26 will search the neighbourhood of element (i,j,k) that is already registered by the color look-up table 16 as the simultaneously displaying color to obtain elements (i',j',k') satisfying $H(i',j',k') \neq 0$, and then feed such elements (i',j',k') to the color translation table 14 as the

data CTS to map them to the corresponding color number. At the same time H (i',j',k') in the pseudo-three-dimensional histogram storage 21 is set for zero (Step 41).

Then, the neighbourhood is incremented by the neighbourhood determining circuit 25 (Step 42). When the neighbourhood determining circuit 25 operates for the first time, the increment makes the neighbourhood as shown by the broken lines in Fig. 4A. When it operates for the second time, the increment makes it as shown by the broken lines in Fig. 4B. Same applies to the following.

When the increment is performed as above, the pseudo histogram processing circuit 27 newly calculates S (i,j,k) and D (i,j,k) (Step 43). Then, the operation is returned to Step 35.

When such increment is performed, resolution of the

$$M \geqq \frac{N}{nr}$$

color space becomes coarse, whereby is easily established. For example, such a state is considered which is caused after $S_1$ is selected as the simultaneously displaying color as described with reference to Fig. 5A, which is shown in Fig. 5B. A small circle $S_1$ indicates that it is already selected as the simultaneously displaying color, and deleted from the color space. In the case of Fig. 5B, M = $S_2$ = 1000, with N = 10000 - 6000 = 4000, and nr = 15. Therefore,

$$M \geqq \frac{N}{nr}$$

is not established, and $S_2$ is not selected as the simultaneously displaying color as it is. Thus, the neighbourhood is expanded by the neighbourhood determining circuit 25. In Fig. 5B, it is exaggerated as indicated by a broken line circle 0. This newly adds $S_3$ and $S_4$ to $S_2$ to make $S_2$ = 2100, which satisfies

$$M \geqq \frac{N}{nr}.$$

Thus, the element (i,j,k) of $S_2$ is registered in the color look-up table 16 as the simultaneously displaying color.

The operation continues until T = 0. Finally, all of simultaneously displaying colors are registered in the color look-up table 16, and the elements (i,j,k) and (i',j',k') corresponding to the simultaneously displaying colors are registered in the color translation table 14.

After the setup of the color translation table 14 and the color look-up table 16 by the color quantizer 13 as above described, the image data from the digitizer 11 are best quantized and displayed on the CRT 19.

As described, the system according to this invention calculates the popularity (number of pixels) for small spaces defined on the color space, and, if the largest popularity M satisfies

$$M \geqq \frac{N}{nr}, \text{ where N is the number}$$

of pixels not mapped for registered simultaneously displaying colors, nr the number of undefined simultaneously displaying colors, registers a color element (i,j,k) representing the largest popularity M as the simultaneously displaying color to divide the remaining pixels of N into color elements of nr as evenly as possible. On the other hand, if

$$M \geqq \frac{N}{nr}$$

is not satisfied, it increments the small spaces to establish

$$M \geqq \frac{N}{nr}.$$

That is, the scale for calculating the popularity is made coarse so that the remaining pixels can be divided as evenly as possible.

Thus, it is possible to perform the color quantization with very little deterioration of the image quality. In

addition, it is possible to simplify the processing because the selection and the mapping of simultaneously displaying colors are performed at the same time.

## Claims

**1.** A method
for selecting the colours to be displayed of a colour image in a colour image display system
wherein said colour image consists of a number of pels and wherein all possible colours form a colour space,
comprising the following steps:
defining sub-spaces within said colour space (Figs. 4 and 7) said sub-spaces representing a displayable colour, respectively,
calculating the number of pels within each of said sub-spaces (steps 31, 32 of Fig. 3),
selecting that sub-space which has the largest number of pels out of those sub-spaces which have not already been selected (step 38 of Fig. 3),
determining (step 39 of Fig. 3)

$$\text{whether the requirement } M \geqq \frac{A - B}{n1 - n2} \text{ is satisfied or not,}$$

wherein M is said largest number of pels of said selected sub-space,
A is said number of all the pels of said colour image,
B is the number of all the pels of those sub-spaces which have already been selected
n1 is the number of all sub-spaces, and
n2 is the number of all those sub-spaces which have already been selected, and if said requirement is satisfied:
selecting said sub-space with the largest number of pels as one of those sub-spaces of which the represented colour is to be displayed (step 40 of Fig. 3),
or if said requirement is not satisfied:
incrementing the size of said sub-space (step 43 of Fig. 3).

**2.** An apparatus
for selecting the colours to be displayed of a colour image in a colour image display system
wherein said colour image consists of a number of pels and wherein all possible colours form a colour space,
comprising:
means for defining sub-spaces within said colour space (Figs. 4 and 7) said sub-spaces representing a displayable colour, respectively,
means for calculating the number of pels within each of said sub-spaces (31, 32 of Fig. 3),
means for selecting that sub-space which has the largest number of pels out of those sub-spaces which have not already been selected (38 of Fig. 3),
means for determining (39 of Fig. 3)

$$\text{whether the requirement } M \geqq \frac{A - B}{n1 - n2} \text{ is satisfied or not,}$$

wherein M is said largest number of pels of said selected sub-space,
A is said number of all the pels of said colour image,
B is the number of all the pels of those sub-spaces which have already been selected
n1 is the number of all sub-spaces, and
n2 is the number of all those sub-spaces which have already been selected, means for selecting

said sub-space with the largest number of pels as one of those sub-spaces of which the represented colour is to be displayed (40 of Fig. 3), if said requirement is satisfied, and

means for incrementing the size of said sub-space (43 of Fig. 3), if said requirement is not satisfied.

## Revendications

1. Procédé pour sélectionner les couleurs, devant être affichées, d'une image en couleurs dans un système d'affichage d'images en couleurs,
ladite image en couleurs étant constituée par un certain nombre de pixels, et toutes les couleurs possibles formant un espace couleurs,
comprenant les étapes suivantes consistant à :
définir des sous-espaces à l'intérieur dudit espace couleurs (figures 4 et 7), lesdits sous-espaces représentant respectivement une couleur pouvant être affichée,
calculer le nombre des pixels dans chacun desdits sous-espaces (pas 31,32 de la figure 3),
sélectionner le sous-espace qui possède le nombre maximum de pixels, en dehors des sous-espaces qui n'ont pas déjà été sélectionnés (pas 38 de la figure 3),
déterminer (pas 39 de la figure 3)

$$\text{si la condition } M \geq \frac{A - B}{n1 - n2} \text{ est satisfaite ou non,}$$

M étant ledit nombre maximum de pixels dudit sous-espace sélectionné,
A étant ledit nombre de tous les pixels de ladite image en couleurs,
B étant le nombre de tous les pixels des sous-espaces qui ont déjà été sélectionnés,
n1 étant le nombre de tous les sous-espaces, et
n2 étant le nombre de tous les sous-espaces, qui ont déjà été sélectionnés,
et si ladite condition est satisfaite:
sélectionner ledit sous-espace possédant le nombre maximum de pixels comme étant l'un des sous-espaces dont la couleur représentée doit être affichée (pas 40 sur la figure 3), ou si ladite condition n'est pas satisfaite: incrémenter la taille dudit sous-espace (pas 43 sur la fi gure 3).

2. Dispositif servant à sélectionner les couleurs, devant être affichées, d'une image en couleurs dans un dispositif d'affichage d'images en couleurs, ladite image en couleurs étant constituée par un certain nombre de pixels, et toutes les couleurs possibles formant un espace en couleurs,
comprenant:
des moyens pour définir des sous-espaces à l'intérieur dudit espace couleurs (figures 4 et 7), lesdits sous-espaces représentant respectivement une couleur pouvant être affichée,
des moyens pour calculer le nombre des pixels à l'intérieur de chacun desdits sous-espaces (31,32 de la figure 3), des moyens pour sélectionner le sous-espace qui possède le nombre maximum de pixels, en dehors des sous-espaces qui n'ont pas déjà été sélectionnés (38 sur la figure 3), des moyens pour déterminer (39 sur la figure 3),

$$\text{si la condition } M \geq \frac{A - B}{n1 - n2} \text{ est satisfaite ou non,}$$

M étant ledit nombre maximum de pixels dudit sous-espace sélectionné,
A étant ledit nombre de tous les pixels de ladite image en couleurs,
B étant le nombre de tous les pixels des sous-espaces qui ont déjà été sélectionnés,
n1 étant le nombre de tous les sous-espaces, et
n2 étant le nombre de tous les sous-espaces, qui ont déjà été sélectionnés,
des moyens pour sélectionner ledit sous-espace possédant le nombre maximum de pixels comme étant l'un des sous-espaces dont la couleur représentée doit être affichée (40 sur la figure 3), si ladite condition est satisfaite, et des moyens pour incrémenter la taille dudit sous-espace (43 sur la figure 3) si ladite condition n'est pas satisfaite.

## Ansprüche

1. Verfahren zum Auswählen der anzuzeigenden Farben eines Farbbildes in einem Farbbild-Anzeigesystem bei dem das Farbbild aus einer Reihe von Bildelementen besteht und bei dem alle möglichen Farben einen Farbraum bilden
umfassend die folgenden Verfahrensschritte:
Definieren von Unterräumen innerhalb des Farbraumes (Fign. 4 und 7), wobei die Unterräume einer anzeigbaren Farbe entsprechen,
Berechnen der Anzahl von Bildelementen innerhalb jedes der Unterräume (Schritte 31, 32 der Fig. 3),
Auswählen desjenigen Unterraumes, der die größte Anzahl von Bildelementen unter denjenigen Unterräumen besitzt, die nicht bereits ausgewählt wurden (Schritt 38 von Fig. 3),
Feststellen (Schritt 39 der Fig. 3), ob die

$$\text{Bedingung } M \geq \frac{A - B}{n1 - n2} \text{ erfüllt ist oder nicht,}$$

wobei

M die größte Anzahl der Bildelemente des ausgewählten Unterraumes ist,
A die Anzahl aller Bildelemente des Farbbildes,
B die Anzahl aller Bildelemente derjenigen Unterräume, die bereits ausgewählt wurden,
n1 die Anzahl aller Unterräume und
n2 die Anzahl all derjenigen Unterräume, die bereits ausgewählt wurden,
und, wenn die Bedingung erfüllt ist: Auswählen des Unterraumes mit der größten Anzahl von Bildelementen als eines derjenigen Unterräume, von denen die bezeichnete Farbe anzuzeigen ist (Schritt 40 von Fig. 3),
oder, wenn diese Bedingung nicht erfüllt ist:
Erhöhen der Größe des Unterraumes (Schritt 43 von Fig. 3).

2. Vorrichtung zum Auswählen der anzuzeigenden Farben eines Farbbildes in einem Farbbild-Anzeigesystem,
bei dem das Farbbild aus einer Reihe von Bildelementen besteht und bei dem alle möglichen Farben einen Farbraum bilden,
enthaltend:
Mittel zum Definieren von Unterräumen in dem Farbraum (Fign. 4 und 7), wobei die Unterräume eine anzeigbare Farbe bezeichnen,
Mittel zum Berechnen der Anzahl von Bildelementen innerhalb jedes Unterraumes (31, 32 von Fig. 3),
Mittel zum Auswählen desjenigen Unterraumes, der unter denjenigen Unterräumen, die noch nicht ausgewählt wurden (38 von Fig. 3), die größte Anzahl von Bildelementen aufweist,
Mittel zum Feststellen (39 der Fig. 3),

$$\text{ob die Bedingung } M \geq \frac{A - B}{n1 - n2} \text{ erfüllt ist oder}$$

nicht, wobei

M die größte Anzahl von Bildelementen des ausgewählten Unterraumes ist,
A die Anzahl aller Bildelemente des Farbbildes ist,
B die Anzahl der Bildelemente derjenigen Unterräume ist, die bereits ausgewählt wurden,
n1 die Anzahl aller Unterräume ist und
n2 die Anzahl all derjenigen Unterräume ist, die bereits ausgewählt wurden, Mittel zum Auswählen desjenigen Unterraumes mit der größten Anzahl von Bildelementen als eines derjenigen Unterräume, von denen die bezeichnete Farbe anzuzeigen ist (40 von Fig.3), wenn die Bedingung erfüllt ist und
Mittel zum Erhöhen der Größe des Unterraumes (43 von Fig. 3), wenn die Bedingung nicht erfüllt ist.

1/1

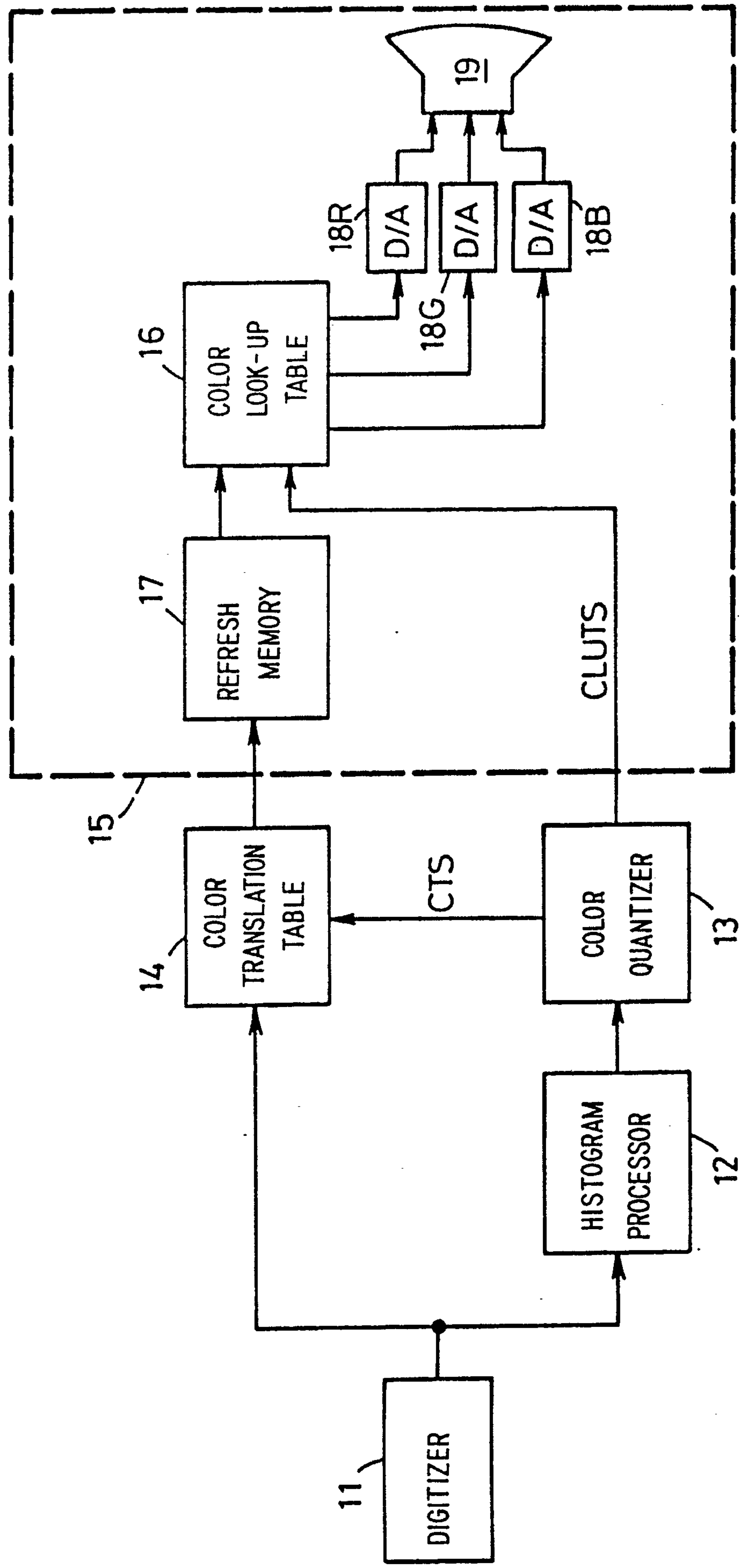
DIGITIZER
11
HISTOGRAM PROCESSOR
12
COLOR QUANTIZER
13
COLOR TRANSLATION TABLE
14
CTS
15
REFRESH MEMORY
17
CLUTS
COLOR LOOK-UP TABLE
16
D/A
18R
18G
18B
19

FIG. 1

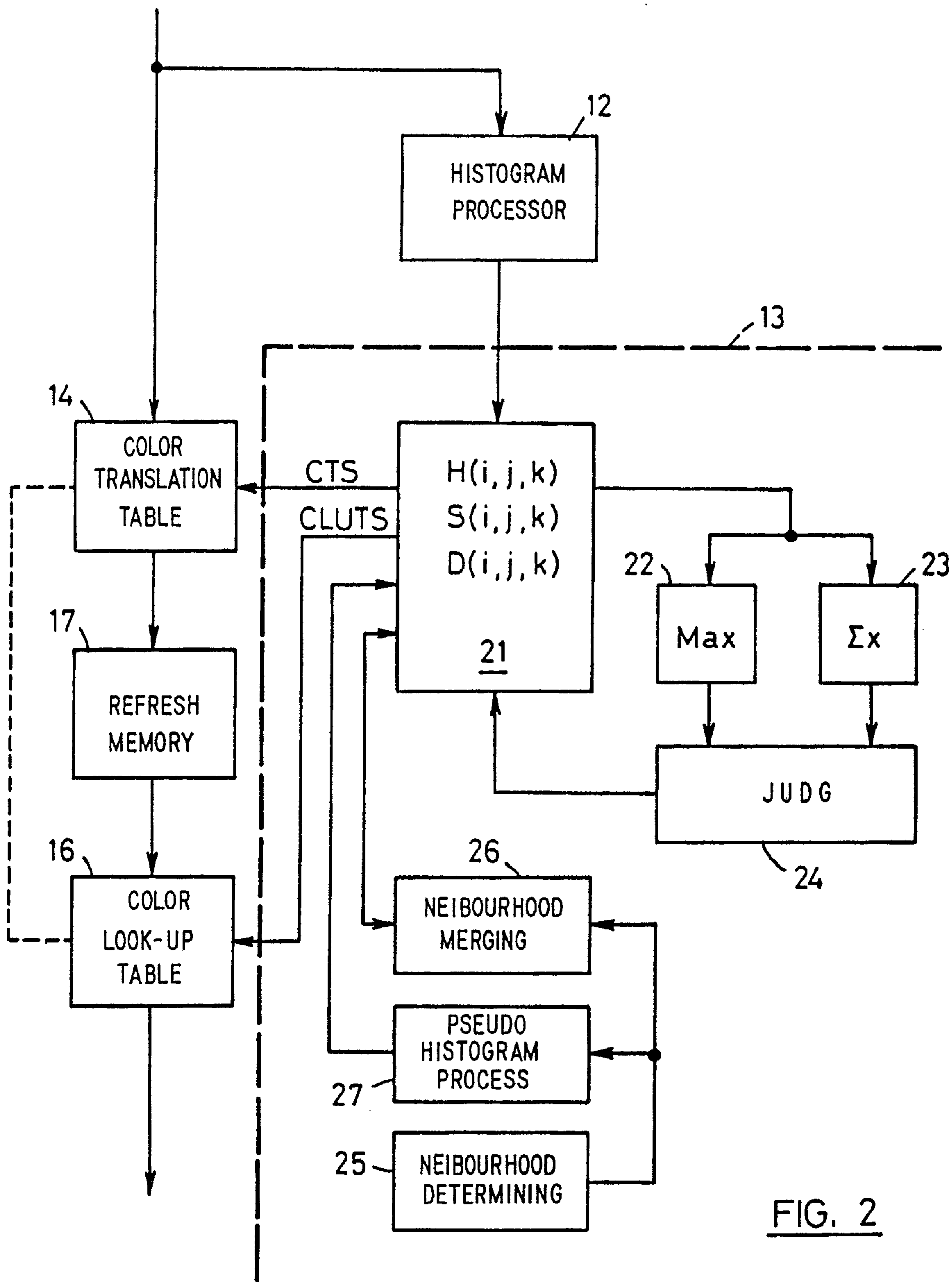
12
HISTOGRAM PROCESSOR
13
14
COLOR TRANSLATION TABLE
CTS
CLUTS
H(i, j, k)
S(i, j, k)
D(i, j, k)
21
22
23
Max
Σx
17
REFRESH MEMORY
JUDG
24
16
COLOR LOOK-UP TABLE
26
NEIBOURHOOD MERGING
PSEUDO HISTOGRAM PROCESS
27
25
NEIBOURHOOD DETERMINING

FIG. 2

FIG. 3

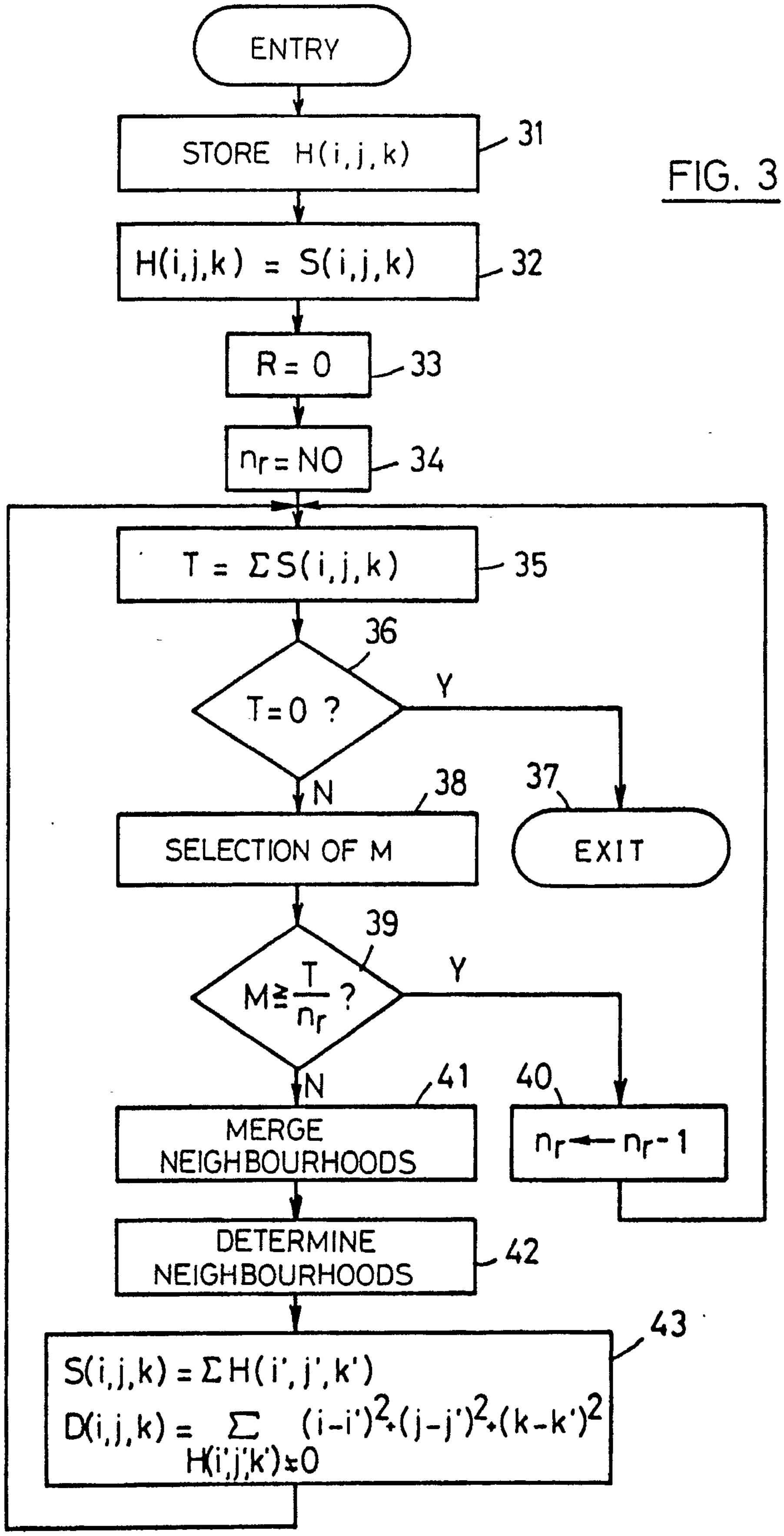
ENTRY
STORE H(i,j,k)
31
H(i,j,k) = S(i,j,k)
32
R = 0
33
$n_r$ = NO
34
T = ΣS(i,j,k)
35
36
T=0 ?
Y
N
37
EXIT
38
SELECTION OF M
39
$M \geq \frac{T}{n_r}$ ?
Y
N
40
$n_r \leftarrow n_r - 1$
41
MERGE NEIGHBOURHOODS
DETERMINE NEIGHBOURHOODS
42
43
S(i,j,k) = ΣH(i',j',k')
$D(i,j,k) = \sum_{H(i',j',k') \neq 0} (i-i')^2 + (j-j')^2 + (k-k')^2$

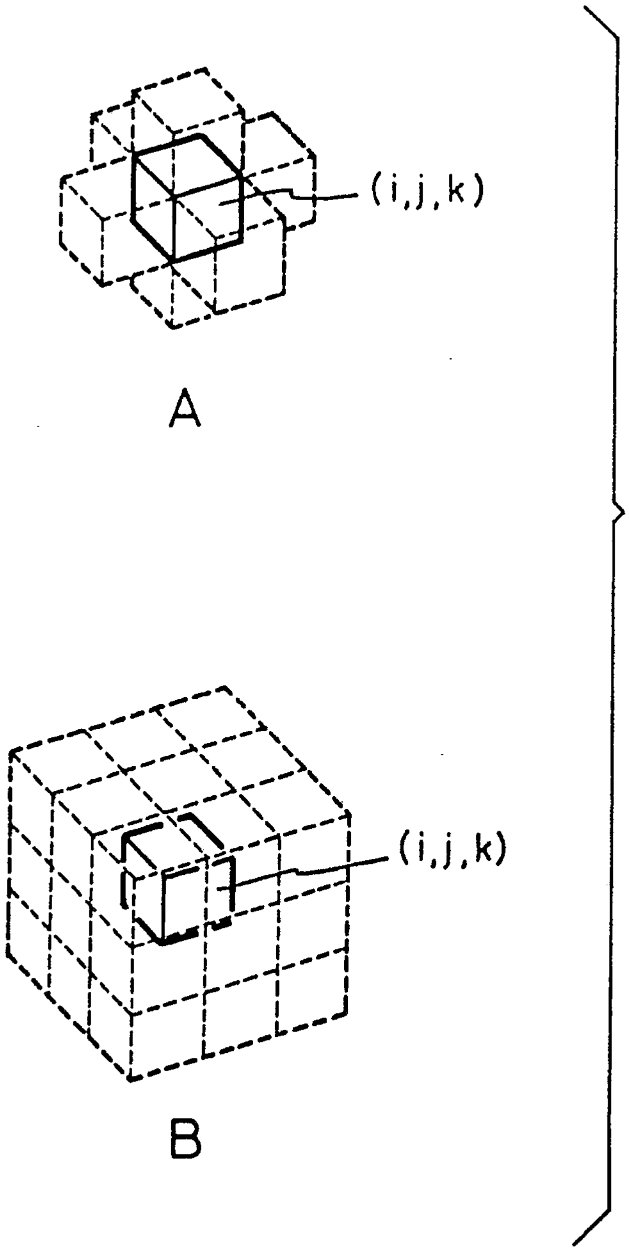


FIG. 4

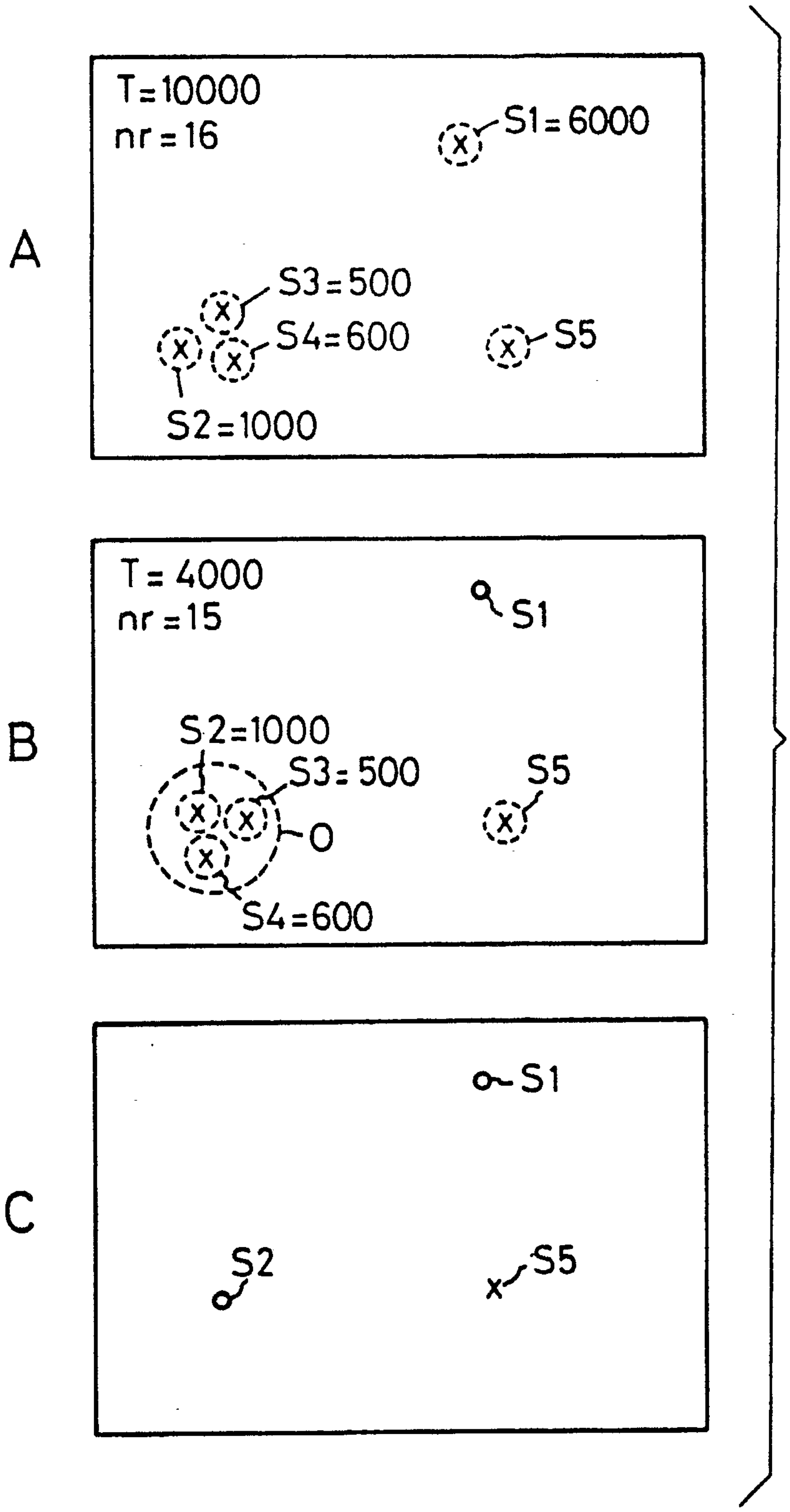
A
T=10000
nr=16
S1=6000
S3=500
S4=600
S5
S2=1000
B
T=4000
nr=15
S1
S2=1000
S3=500
O
S5
S4=600
C
S1
S2
S5

FIG. 5

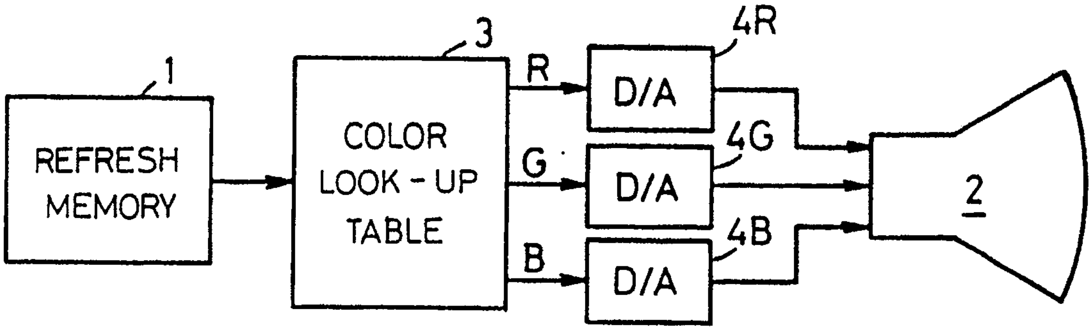
1
REFRESH MEMORY
3
COLOR LOOK - UP TABLE
R
G
B
4R
D/A
4G
D/A
4B
D/A
2

FIG. 6

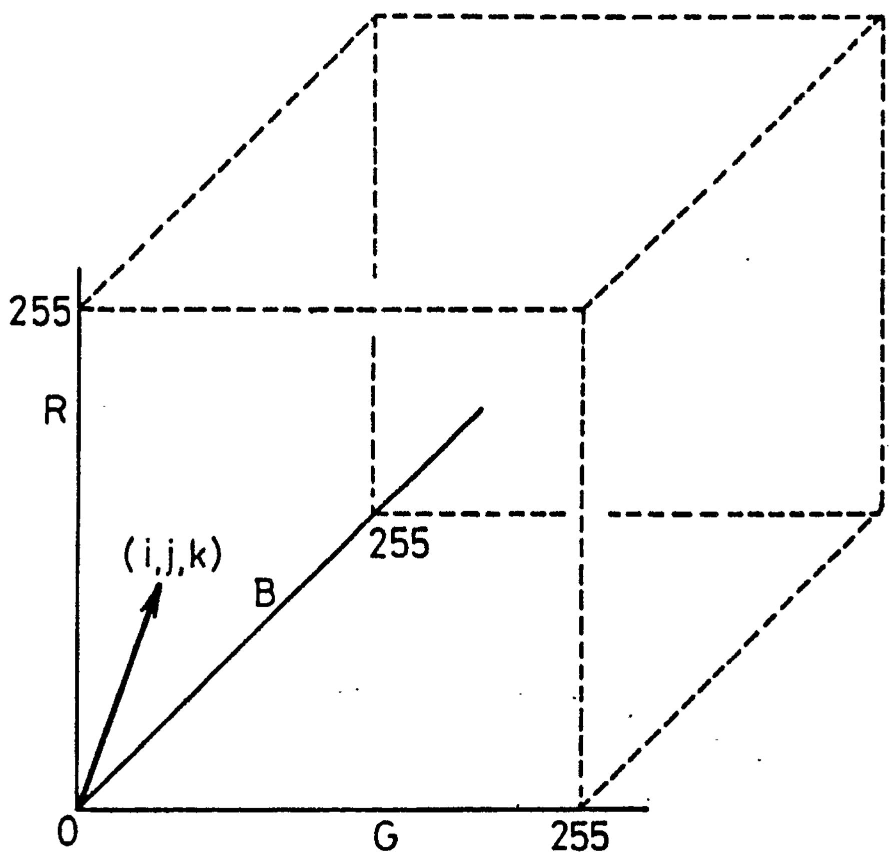
255
R
(i,j,k)
B
255
0
G
255

FIG. 7